# EUROPÄISCHE PATENTSCHRIFT

(11) **EP 3 970 498 B1**
(45) Veröffentlichungstag und Bekanntmachung des Hinweises auf die Patenterteilung: **25.10.2023**
(21) Anmeldenummer: 20197259.3
(22) Anmeldetag: 21.09.2020
(51) Int. Cl.: A21C 1/02, B01F 27/807, B01F 27/85, B01F 27/922, F16J 15/34

(54) **KNETMASCHINE FÜR NAHRUNGSMITTELTEIGE MIT ABDICHTUNG DER KNETWERKZEUGE**
KNEADING MACHINE FOR FOOD PRODUCTS WITH SEALING OF THE KNEADING TOOLS
MACHINE À PÉTRIR POUR PÂTES ALIMENTAIRES À ÉTANCHÉITÉ DES OUTILS DE PÉTRISSAGE

(43) Veröffentlichungstag der Anmeldung: 23.03.2022
(73) Patentinhaber: DIOSNA Dierks & Söhne GmbH, 49086 Osnabrück (DE)
(72) Erfinder: GHANI, Hashem, 49086 Osnabrück (DE); BENSMANN, Stefan, 49078 Osnabrück (DE)
(74) Vertreter: Lenzing Gerber Stute

(56) Entgegenhaltungen:
- EP-A1- 2 892 405
- EP-A2- 0 351 693
- WO-A1-2015/022852
- DE-A1- 1 757 361
- DE-B- 1 080 076
- JP-A- 2004 041 903

## Beschreibung

Die vorliegende Erfindung betrifft eine Knetmaschine für Nahrungsmittelteige mit den Merkmalen des Oberbegriffs des Anspruchs 1.

Knetmaschinen für Nahrungsmittelteige, insbesondere Backteige, weisen einen Knetbottich unterschiedlicher Größe für Teigmassen von 100 bis 1000 Kg auf, in den mindestens ein motorisch antreibbares Knetwerkzeug zur Durchführung des Knetvorganges einbringbar ist. Die Knetwerkzeuge sind jeweils an einer vertikalen Werkzeugwelle befestigt, die angetrieben ist. Um zu verhindern, dass Nahrungsmittelteig an der Welle hochkriecht und in einen im Betrieb unzugänglichen Innenraum gelangt oder sogar in das Werkzeuggetriebe, ist die drehbare Welle gegenüber dem umgebenden, feststehenden Gehäuse abgedichtet. Herkömmlicherweise werden dazu Radialwellendichtringe oder Gleitringdichtungen im Spalt zwischen Welle und Gehäuse verwendet. Eine solche Anordnung ist beispielsweise aus der Patentschrift EP 0 351 693 A2 bekannt. Dabei kann allerdings nicht ausgeschlossen werden, dass Teig, insbesondere beim Werkzeuggegenlauf durch die Dichtung in den Innenraum dringt. Die Lagerung der Werkzeugwelle kann dadurch beschädigt werden. Zudem ist eine Reinigung des Innenraums nur schwer möglich.

Es ist Aufgabe der vorliegenden Erfindung eine Knetmaschine für Nahrungsmittelteige anzugeben, bei der die Gefahr minimiert wird, dass Teig in den Innenraum zwischen Werkzeugwelle und Gehäuse gelangt.

Diese Aufgabe wird von einer Knetmaschine für Nahrungsmittelteige mit den Merkmalen des Anspruchs 1 gelöst.

Demnach ist eine Knetmaschine für Nahrungsmittelteige umfassend
- einen Knetbottich,
- eine oder mehrere in einem Gehäuse drehbar gelagerte Werkzeugwellen, die jeweils um eine vertikale Achse drehbar sind und
- jeweils ein an der Werkzeugwelle befestigbares und in den Knetbottich einbringbares Knetwerkzeug,
- einen Knetraum,
- einen Ausweichraum für an dem Knetwerkzeug nach oben, aus dem Knetraum herauskriechenden Nahrungsmittelteig,
- und wenigstens einen gehäusefesten Dichtungsträger, der eine die Werkzeugwelle gegenüber dem Dichtungsträger abdichtende Dichtungsanordnung trägt, vorgesehen.

Der Dichtungsträger ist jeweils von der Werkzeugwelle um einen ersten Spalt beabstandet, der außerhalb des Knetraums liegt und der mit dem Ausweichraum unmittelbar kommuniziert. Zwischen der Werkzeugwelle und einem zumindest im Betrieb unbeweglichen Teil der Knetmaschine ist ein zweiter Spalt gebildet, der mit dem Knetraum und dem Ausweichraum unmittelbar kommuniziert, wobei der zweite Spalt in vertikaler Richtung tiefer als der erste Spalt liegt und der zweite Spalt in radialer Richtung zur Drehachse weiter außen als der erste Spalt liegt.

Durch das Vorsehen des Ausweichraums wird an der Welle hoch wandernder Teig gezielt abgeführt. So kann verhindert werden, dass Teig in die Dichtungsanordnung zwischen die Werkzeugwelle und den Dichtungsträger gelangt und Schaden und/oder Verunreinigung anrichtet.

Unter dem Term "unmittelbar kommuniziert" wird verstanden, dass die beiden Räume unmittelbar in Verbindung stehen und dazwischen kein weiterer Raum liegt. Der Teig fließt unmittelbar von einem in den anderen Raum.

Bevorzugt ist die Knetmaschine zur Aufnahme von Teigmassen in einem Bereich von 100 bis 1000 Kg ausgelegt.

Bevorzugt ist der Ausweichraum zumindest teilweise nach oben offen und/oder von außen zur Reinigung frei zugänglich. Die erfindungsgemäße Werkezugabdichtung eignet sich besonders für Knetmaschinen mit einem offenen Konzept, bei dem größtenteils auf Abdeckungen der Maschine verzichtet werden.

In einer bevorzugten Ausführungsform umfasst die Werkzeugwelle einen ringförmigen Dichtkörper der lösbar oder einstückig mit einem Werkzeugflansch der Werkzeugwelle ausgebildet ist und im Zusammenspiel mit der Dichtungsanordnung die Werkzeugwelle gegenüber dem gehäusefesten Dichtungsträger abdichtet, wobei der erste Spalt zwischen dem Dichtkörper und dem gehäusefesten Dichtungsträger angeordnet ist. Es kann sein, dass der Dichtkörper ein separates Bauteil darstellt, dass auf dem Werkzeugflansch der Werkzeugwelle sitzt und diese konzentrisch umgibt. Die Werkzeugwelle ist dann zweiteilig ausgebildet. Das zusätzliche Bauteil ist aus Edelstahl hergestellt. Der Dichtkörper hat zudem den Vorteil, dass die Dichtungsanordnung vor Beschädigung von außen, beispielsweise durch einen Spachtel, geschützt ist, da er die Dichtungsanordnung nach unten hin zum Knetraum abdeckt.

Vorzugsweise ist der zumindest im Betrieb unbewegliche Teil ein Deckel, der den nach oben hin offenen Knetbottich abdeckt. Bevorzugt umfasst der Deckel eine Abdeckplatte, die Öffnung des Deckels zur Durchführung der einen oder mehreren Werkzeugwellen begrenzt, wobei der zweite Spalt in einer Betriebsstellung der Abdeckplatte zwischen einer Innenseite der Abdeckplatte und einer Außenseite des Dichtkörpers liegt. Der zweite Spalt liegt somit zwischen den gehäusefesten Komponenten (Deckel, Abdeckplatte) und dem Dichtkörper. Die Abdeckplatte ist vorzugsweise vertikal zwischen einer Betriebsstellung und einer Reinigungsstellung verfahrbar.

Die Dichtungsanordnung weist vorzugsweise wenigstens einen Wellendichtring auf.

Bevorzugt umfasst die Knetmaschine zwei Wendelwerkzeuge, die sich entgegengesetzt drehen.

Eine bevorzugte Ausführungsform der Erfindung wird nachfolgend anhand der Zeichnungen näher erläutert. Gleichartige oder gleichwirkende Bauteile werden in den Figuren mit denselben Bezugszeichen bezeichnet. Es zeigen:
- Figur 1:: eine räumliche Darstellung einer Knetmaschine mit Knetbottich in einer Reinigungsstellung,
- Figur 2:: einen Längsschnitt durch eine herkömmliche Werkzeugabdichtungseinrichtung einer Knetmaschine,
- Figur 3:: einen Längsschnitt durch eine erfindungsgemäße Werkzeugabdichtungseinrichtung einer Knetmaschine, sowie
- Figur 4:: eine räumliche Ansicht einer geschnittenen Darstellung der in Figur 3 dargestellten Werkzeugabdichtungseinrichtung.

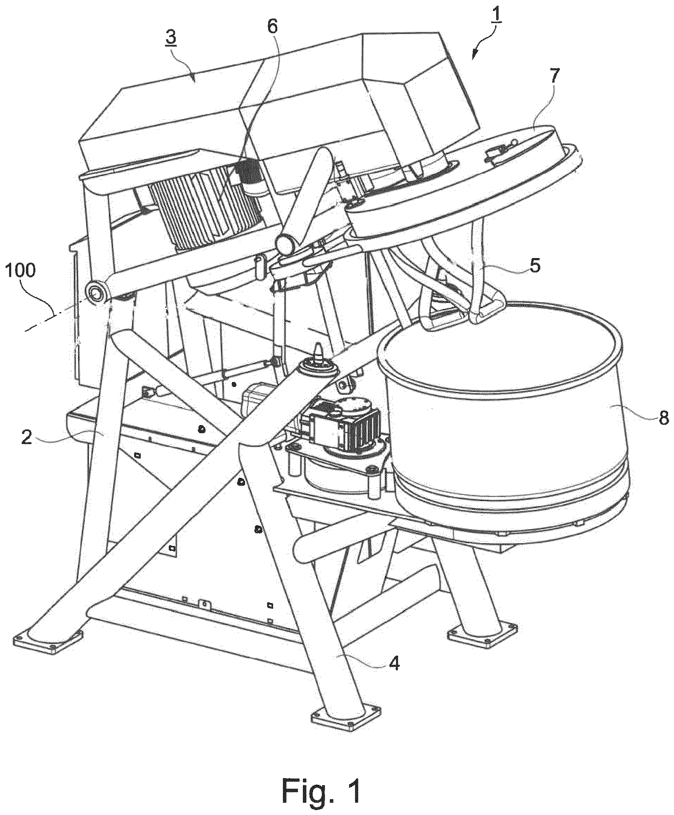

Die Figur 1 zeigt eine Knetmaschine 1 zur Verarbeitung eines Nahrungsmittelteigs, insbesondere eines Backteigs. Die Knetmaschine 1 weist ein Knetmaschinengestell 2 auf, dessen Kopfteil 3 um eine Schwenkachse 100 zwischen einer unteren Betriebsstellung und einer oberen Reinigungsstellung gegenüber einem Unterteil 4 verschwenkbar ist. Das Kopfteil 3 trägt das Knetwerkzeug 5, hier dargestellt sind zwei entgegengesetzt drehende Wendelkneter, und den für eine Rotation des Knetwerkzeugs 5 benötigten Antrieb 6, sowie einen Deckel 7, der zum Abdecken des nach oben hin offenen Knetbottichs 8 vorgesehen ist. Die Knetmaschine weist ein offenes Konzept auf, bei dem nur wenige Teile nach außen hin abgedeckt sind.

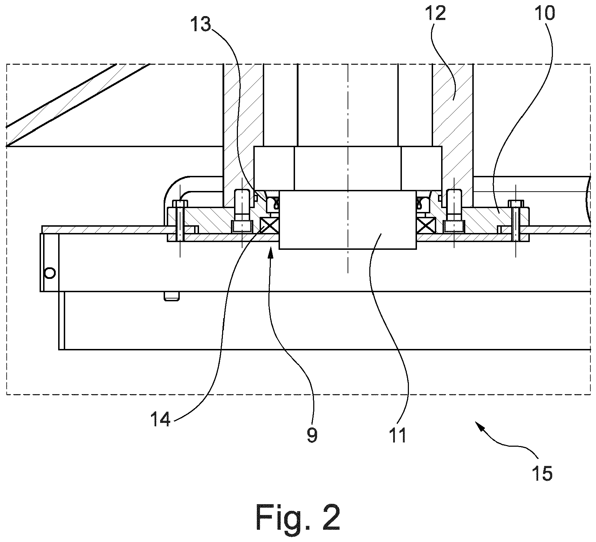

In der Figur 2 ist eine herkömmliche Abdichtung einer Werkzeugwelle dargestellt. Ein Dichtpaket 9 dichtet einen Dichtflansch 10 einer Werkzeugwelle 11 des Knetwerkzeugs gegenüber dem Gehäuse 12 ab. Das Dichtpaket weist einen ersten Wellendichtring 13 und einen zweiten Wellendichtring 14 auf. Wie bereits oben erwähnt wurde, hat eine solche Anordnung den Nachteil, dass der Spalt zwischen Werkzeugwelle 11 und Gehäuse 12 unmittelbar mit dem Knetraum 15 kommuniziert. Teig kann somit aus dem Knetraum 15 durch das Dichtpaket 9 in den Spalt gelangen und den Bereich verschmutzen und/oder Schaden anrichten. Der Knetraum 15 ist dabei der Raum, der für den Knetvorgang der Knetmaschine vorgesehen ist.

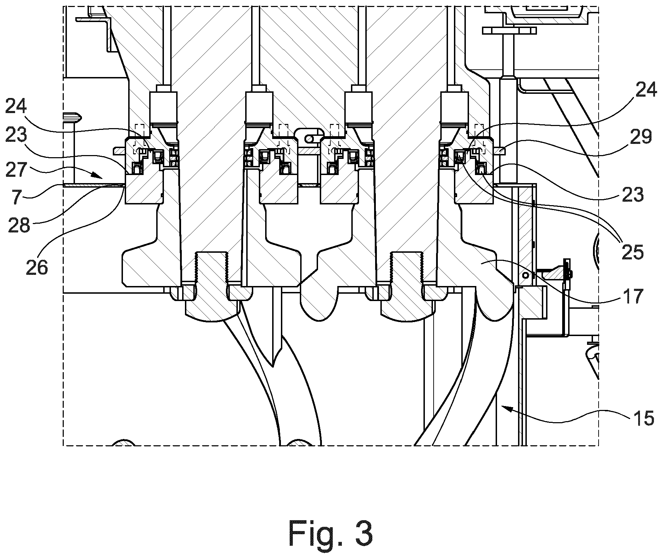

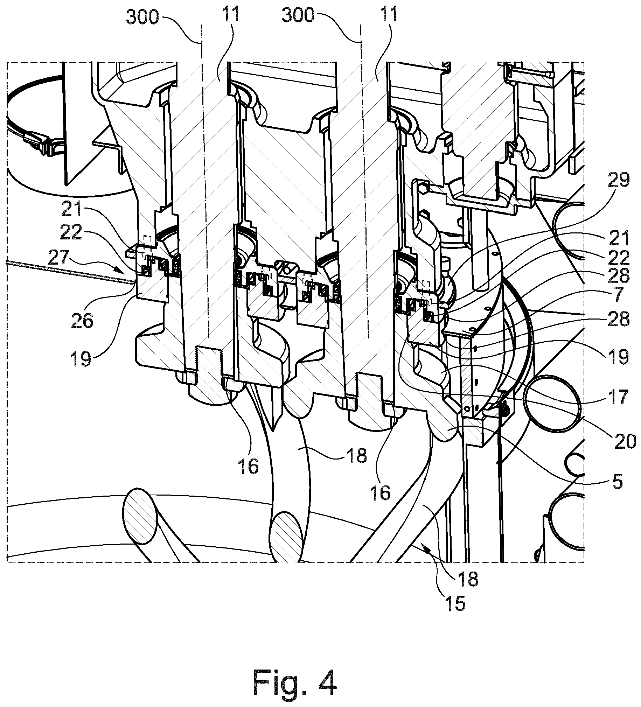

Die Figuren 3 und 4 zeigen eine erfindungsgemäße Abdichtung der Knetwerkzeuge 5. Die Knetmaschine 1 umfasst zwei in einem Gehäuse drehbar gelagerte Werkzeugwellen 11. Diese sind jeweils um eine vertikale Achse 300 mittels eines Antriebs zur Rotation antreibbar. Die Werkzeugwellen 11 weisen eine Welle mit einem Ende 16 auf, an dem jeweils ein Werkzeugflansch 17 mittels eines konischen Sitzes befestigt ist, der Teil der Werkzeugwelle 11 ist. Es kann auch vorgesehen sein, den Werkzeugflansch 17 derart auszugestalten, dass eine Wendel 18 lösbar befestigt ist. Am oberen Ende der Werkzeugflansche 17 sitzt jeweils ein Dichtkörper 19, der diesen koaxial umschließt und fest mit diesem verbunden ist. Zwischen dem Dichtkörper 19 und dem Werkzeugflansch 17 ist ein O-Ring 20 zur Abdichtung vorgesehen. Jede Werkzeugwelle 11 weist einen gehäusefesten Dichtungsträger 21 auf, der eine Dichtungsanordnung 22 trägt. Die Dichtungsanordnung 22 dichtet den Dichtkörper 19 bzw. die Werkzeugwelle 11 gegenüber dem raumfesten Dichtungsträger 21 ab. Der Dichtungsträger 21 ist von dem Dichtkörper 19 um einen ersten Spalt 23 beabstandet, in dem die Dichtungsanordnung 22 liegt. Auf der Oberseite des Dichtkörper 19 ist eine kreisförmige Erhebung 24 mit jeweils einem Absatz auf einer Seite anordnet. Im Zusammenspiel mit dem Dichtungsträger 21, bildet die Oberseite des Dichtkörpers 19 einen sicheren Sitz für die Dichtungsanordnung 22 aus, die zwei in Radialrichtung zur Drehachse 300 der entsprechenden Werkzeugwelle 11 beabstandete Wellendichtringe 25 umfasst. In Radialrichtung nach außen schließt in Betriebsstellung an den Dichtkörper 19 der Deckel 7 an. Zwischen Dichtkörper 19 und Deckel 7 ist dabei ein zweiter Spalt 26 vorgesehen, damit sich die Werkzeuge frei drehen können. Die Oberseite des Dichtkörpers 19 liegt dabei oberhalb des Deckels 7. Der zweite Spalt 26 steht unmittelbar in Kommunikation mit dem Knetraum 15 und verbindet den Knetraum 15 mit einem Ausweichraum 27. Der Knetraum 15 ist für den Knetvorgang vorgesehen. Wandert Teig an dem Werkzeugflansch 17 bzw. der Werkzeugwelle 11 nach oben, kriecht er an dem Dichtkörper 19 vorbei zu dem zweiten Spalt 26 und gelangt in den Ausweichraum 27, wo er sich ungehindert ausbreiten kann. Da der erste Spalt 23 keine unmittelbare Kommunikation zu dem Knetraum 15 aufweist, bleibt die Dichtungsanordnung 22 frei von Teig, der aus dem kritischen Bereich herausgeleitet wird. Der Ausweichraum 27 ist nach oben offen und kann aufgrund des offenen Konzeptes der Knetmaschine vom Bediener gesichtet werden. Eine Reinigung des Ausweichsraums 27 ist dadurch ebenfalls einfach.

Die Öffnungen 28 des Deckels, die von den Werkzeugen durchsetzt werden, werden durch eine Abdeckplatte 29 aus Sicherheitsgründen begrenzt. In den Figuren 3 und 4 ist die Abdeckplatte 29 in einer oberen Reinigungsstellung dargestellt. Aus Hygienegründen lässt sich die Abdeckplatte 29 für die Reinigung vertikal verschieben. Der zweite Spalt 26 erstreckt sich dann weiter zwischen Dichtkörper 19 und Innenseite der Abdeckplatte 29.

Der zweite Spalt 26 liegt in vertikaler Richtung nach unten, tiefer als der erste Spalt 23. In radialer Richtung zur Drehachse liegt der zweite Spalt 26 weiter außen als der erste Spalt 23. Durch eine solche Anordnung kann sichergestellt werden, dass am Werkzeug nach oben bewegender Teig nicht in die Dichtungsanordnung gelangt, sondern in den Ausweichraum ausweicht.

## Patentansprüche

1. Knetmaschine (1) für Nahrungsmittelteige umfassend
- einen Knetbottich (8),
- eine oder mehrere in einem Gehäuse drehbar gelagerte Werkzeugwellen (11), die jeweils um eine vertikale Achse (300) drehbar sind und
- jeweils ein an der Werkzeugwelle (11) befestigbares und in den Knetbottich einbringbares Knetwerkzeug (5),
- einen Knetraum (15),
- einen Ausweichraum (27) für an dem Knetwerkzeug (5) nach oben, aus dem Knetraum (15) herauskriechenden Nahrungsmittelteig,
wobei jeder Werkzeugwelle (11) ein gehäusefester Dichtungsträger (21) zugeordnet ist, der eine die Werkzeugwelle (11) gegenüber dem Dichtungsträger (21) abdichtende Dichtungsanordnung (22) trägt,
wobei der Dichtungsträger (21) von der Werkzeugwelle (11) um einen ersten Spalt (23) beabstandet ist, der außerhalb des Knetraums (15) liegt und der mit dem Ausweichraum (27) unmittelbar kommuniziert, **dadurch gekennzeichnet,**
**dass** zwischen der Werkzeugwelle (11)
und einem zumindest im Betrieb unbeweglichen Teil der Knetmaschine ein zweiter Spalt (26) gebildet ist, der mit dem Knetraum (15) und dem Ausweichraum (27) unmittelbar kommuniziert, wobei der zweite Spalt (26) in vertikaler Richtung tiefer als der erste Spalt (23) liegt und der zweite Spalt (26) in radialer Richtung zur Drehachse (300) weiter außen als der erste Spalt (23) liegt.

2. Knetmaschine nach Anspruch 1, **dadurch gekennzeichnet, dass** der Ausweichraum (27) zumindest teilweise nach oben offen ist.

3. Knetmaschine nach Anspruch 1 oder 2, **dadurch gekennzeichnet, dass** der Ausweichraum (27) von außen zur Reinigung frei zugänglich ist.

4. Knetmaschine nach einem der vorhergehenden Ansprüche, **dadurch gekennzeichnet, dass** die Werkzeugwelle (11) einen ringförmigen Dichtkörper (19) umfasst der lösbar oder einstückig mit einem Werkzeugflansch (17) der Werkzeugwelle (11) ausgebildet ist und im Zusammenspiel mit der Dichtungsanordnung (22) die Werkzeugwelle (11) gegenüber dem gehäusefesten Dichtungsträger (21) abdichtet, wobei der erste Spalt (23) zwischen dem Dichtkörper (19) und dem gehäusefesten Dichtungsträger (21) ausgebildet ist.

5. Knetmaschine nach Anspruch 4, **dadurch gekennzeichnet, dass** der Dichtkörper (19) ein separates Bauteil darstellt, dass auf dem Werkzeugflansch (17) der Werkzeugwelle sitzt und diese konzentrisch umgibt.

6. Knetmaschine nach einem der vorhergehenden Ansprüche, **dadurch gekennzeichnet, dass** der zumindest im Betrieb unbewegliche Teil ein Deckel (7) ist, der den nach oben hin offenen Knetbottich (8) abdeckt.

7. Knetmaschine nach Anspruch 6, **dadurch gekennzeichnet, dass** der Deckel (7) eine Abdeckplatte (29) umfasst, die eine Öffnung (28) des Deckels (7) zur Durchführung der einen oder mehreren Werkzeugwellen (11) begrenzt, wobei der zweite Spalt (26) in einer Betriebsstellung der Abdeckplatte (29) zwischen einer Innenseite der Abdeckplatte (29) und einer Außenseite des Dichtkörpers (19) liegt.

8. Knetmaschine nach einem der vorhergehenden Ansprüche, **dadurch gekennzeichnet, dass** die Dichtungsanordnung (22) wenigstens einen Wellendichtring (25) aufweist.

9. Knetmaschine nach einem der vorhergehenden Ansprüche, **dadurch gekennzeichnet, dass** die Knetmaschine (1) zwei Wendelwerkzeuge umfasst, die sich entgegengesetzt drehen.

## Claims

1. Kneading machine (1) for food doughs comprising
- a kneading vat (8),
- one or more tool shafts (11) rotatably mounted in a housing, each of which is rotatable about a vertical axis (300), and
- one kneading tool (5) each, which can be fastened to the tool shaft (11) and inserted into the kneading vat,
- a kneading space (15),
- an escape space (27) for food dough creeping upwards on the kneading tool (5), out of the kneading space (15),
each tool shaft (11) being assigned a seal carrier (21) which is fixed to the housing and bears a seal arrangement (22) which seals off the tool shaft (11) with respect to the seal carrier (21), the seal carrier (21) being spaced apart from the tool shaft (11) by a first gap (23) which lies outside the kneading space (15) and communicates directly with the escape space (27), **characterized in that** a second gap (26) is formed between the tool shaft (11) and a part of the kneading machine that is immovable at least during operation, which second gap communicates directly with the kneading chamber (15) and the escape space (27), wherein the second gap (26) lies deeper in the vertical direction than the first gap (23) and the second gap (26) lies further outwardly in the radial direction relative to the axis of rotation (300) than the first gap (23).

2. Kneading machine according to claim 1, **characterized in that** the escape space (27) is at least partially open towards the top.

3. Kneading machine according to claim 1 or 2, **characterized in that** the escape space (27) is freely accessible from the outside for cleaning.

4. Kneading machine according to one of the preceding claims, **characterized in that** the tool shaft (11) comprises an annular sealing body (19) which is detachably or integrally formed with a tool flange (17) of the tool shaft (11) and, in interaction with the sealing arrangement (22), seals the tool shaft (11) with respect to the housing-fixed seal carrier (21), the first gap (23) being formed between the sealing body (19) and the housing-fixed seal carrier (21).

5. Kneading machine according to claim 4, **characterized in that** the sealing body (19) is a separate component which is seated on the tool flange (17) of the tool shaft and concentrically surrounds it.

6. Kneading machine according to one of the preceding claims, **characterized in that** the part which is immovable at least during operation is a lid (7) covering the kneading vat (8) which is open towards the top.

7. Kneading machine according to claim 6, **characterized in that** the lid (7) comprises a cover plate (29) delimiting an opening (28) of the lid (7) for the passage of the one or more tool shafts (11), the second gap (26) being located between an inner side of the cover plate (29) and an outer side of the sealing body (19) in an operating position of the cover plate (29).

8. Kneading machine according to any one of the preceding claims, **characterized in that** the sealing arrangement (22) comprises at least one shaft seal ring (25).

9. Kneading machine according to one of the preceding claims, **characterized in that** the kneading machine (1) comprises two helical tools rotating in opposite directions.

## Revendications

1. Pétrisseuse (1) dévolue à des pâtes pour produits alimentaires, comprenant
- une cuve de pétrissage (8),
- un ou plusieurs arbre(s) (11) d'outil(s) monté(s) à rotation dans un boîtier et pouvant tourner, à chaque fois, autour d'un axe vertical (300),
- un outil respectif de pétrissage (5), qui peut être fixé à l'arbre (11) d'outil et peut être introduit dans la cuve de pétrissage,
- un espace de pétrissage (15),
- un espace de détournement (27), destiné à de la pâte pour produits alimentaires fluant vers le haut sur l'outil de pétrissage (5) et débordant de l'espace de pétrissage (15), sachant qu'un support (21) de garniture d'étanchement, assujetti au boîtier et affecté à chaque arbre (11) d'outil, porte un ensemble d'étanchement (22) assurant l'étanchéité dudit arbre (11) d'outil par rapport audit support (21) de garniture d'étanchement,
lequel support (21) de garniture d'étanchement est espacé, vis-à-vis de l'arbre (11) d'outil, d'un premier interstice (23) situé à l'extérieur de l'espace de pétrissage (15) et communiquant directement avec l'espace de détournement (27), **caractérisée par le fait qu'**un second interstice (26), réservé entre l'arbre (11) d'outil et une partie de la pétrisseuse qui est immobile, au moins lors du fonctionnement, est en communication directe avec l'espace de pétrissage (15) et avec l'espace de détournement (27), sachant que le second interstice (26) est situé plus bas que le premier interstice (23) dans la direction verticale, et que ledit second interstice (26) est extérieurement plus éloigné que ledit premier interstice (23), dans la direction radiale, par rapport à l'axe de rotation (300).

2. Pétrisseuse selon la revendication 1, **caractérisée par le fait que** l'espace de détournement (27) est au moins partiellement ouvert vers le haut.

3. Pétrisseuse selon la revendication 1 ou 2, **caractérisée par le fait que** l'espace de détournement (27) est librement accessible de l'extérieur à des fins de nettoyage.

4. Pétrisseuse selon l'une des revendications précédentes, **caractérisée par le fait que** l'arbre (11) d'outil inclut un corps annulaire d'étanchement (19) qui est réalisé de manière amovible, ou d'un seul tenant, avec une bride d'outillage (17) dudit arbre (11) d'outil et qui, en association avec l'ensemble d'étanchement (22), instaure l'étanchéité dudit arbre (11) d'outil par rapport au support (21) de garniture d'étanchement assujetti au boîtier, le premier interstice (23) étant réservé entre ledit corps d'étanchement (19) et ledit support (21) de garniture d'étanchement assujetti au boîtier.

5. Pétrisseuse selon la revendication 4, **caractérisée par le fait que** le corps d'étanchement (19) constitue une pièce structurelle distincte qui repose sur la bride d'outillage (17) de l'arbre d'outil, et entoure concentriquement ce dernier.

6. Pétrisseuse selon l'une des revendications précédentes, **caractérisée par le fait que** la partie immobile, au moins lors du fonctionnement, est un couvercle (7) recouvrant la cuve de pétrissage (8) ouverte vers le haut.

7. Pétrisseuse selon la revendication 6, **caractérisée par le fait que** le couvercle (7) inclut une platine de recouvrement (29) délimitant un orifice (28) dudit couvercle (7) dévolu au passage de l'arbre unique, ou des multiples arbres (11) d'outils, sachant que, dans une position de fonctionnement de ladite platine de recouvrement (29), le second interstice (26) est interposé entre une face intérieure de ladite platine de recouvrement (29) et une face extérieure du corps d'étanchement (19).

8. Pétrisseuse selon l'une des revendications précédentes, **caractérisée par le fait que** l'ensemble d'étanchement (22) est pourvu d'au moins une bague (25) d'étanchement d'arbre.

9. Pétrisseuse selon l'une des revendications précédentes, **caractérisée par le fait que** ladite pétrisseuse (1) inclut deux outils hélicoïdaux tournant dans des sens opposés.
